# EUROPÄISCHE PATENTANMELDUNG

(11) **EP 1 447 148 A2**
(43) Veröffentlichungstag der Anmeldung: **18.08.2004**
(21) Anmeldenummer: 04002863.1
(22) Anmeldetag: 10.02.2004
(51) Int. Cl.: B09B 3/00, B02C 19/12, B03B 9/06

(54) **Verfahren, Behältnis und Transportbox zur Abfallverwertung von metall- bzw. metalldampfhaltigen Gegenständen**

(30) Priorität: 13.02.2003 DE 10305471
(71) Anmelder: Köhler, Antonius, 51643 Gummersbach (DE)
(72) Erfinder: Köhler, Antonius, 51643 Gummersbach (DE)
(74) Vertreter: Patentanwälte Hauck, Graalfs, Wehnert, Döring, Siemons, Schildberg

(57) **Zusammenfassung**

Es werden ein Verfahren, ein Behältnis und eine Transportbox zur Abfallverwertung von metall- bzw. metalldampfhaltigen Gegenständen, insbesondere quecksilberdampfhaltige Lampen, beschrieben. Bei dem Verfahren werden die Gegenstände in einer Transportbox gesammelt und einem Behältnis zugeführt, in der sie innerhalb einer im Behältnis befindlichen Flüssigkeit zerstört werden. Hierbei findet eine Separation der seitlichen Endabschnitte der Gegenstände vom Mittelabschnitt derselben statt. Auf diese Weise läßt sich eine besonders effiziente Verwertung der Gegenstände erzielen.

## Beschreibung

Die vorliegende Erfindung betrifft ein Verfahren zur Abfallverwertung von metall- bzw. metalldampfhaltigen Gegenständen, insbesondere quecksilberdampfhaltigen Lampen, bei dem die Gegenstände gesammelt, in ein Behältnis, in dem die Gegenstände in einer das Metall bzw. den Metalldampf in unschädliche Verbindungen, insbesondere Sulfide, umwandelnden Flüssigkeit zerbrochen werden, eingebracht und im Behältnis zerbrochen werden und bei dem der Glas/Metall-Bruch und der durch Umsetzung entstandene Schlamm aus dem Behältnis abgeführt werden.

Ein derartiges Verfahren ist aus der DE 42 33 046 C2 bekannt. Bei dem bekannten Verfahren findet ein Behältnis Verwendung, in das die zu entsorgenden Gegenstände, beispielsweise Quecksilberdampfentladungslampen, eingeführt werden. Der Gegenstand fällt auf die im Behältnis befindliche Flüssigkeit, deren Spiegel in einem geeigneten Abstand unterhalb von der Einführöffnung angeordnet ist. Im Behältnis innerhalb der Flüssigkeit befindet sich ein Rost. Nach Einführung einer bestimmten Anzahl von zu entsorgenden Gegenständen wird eine im Behältnis angeordnete Brechereinrichtung betätigt, die gegen den vorgesehenen Rost arbeitet, um die zwischen Brechereinrichtung und Rost angeordneten Gegenstände zu zerbrechen. Diese fallen als Glas/Metall-Bruch durch die Öffnungen des Rostes auf den Boden des Behältnisses. Da sich der Rost innerhalb der immobilisierenden und reagierenden Flüssigkeit befindet, wird der Effekt erzielt, daß die Flüssigkeit einerseits und die Brechereinrichtung andererseits einen geeigneten Schutzmantel bilden, so daß die beispielsweise bei den Implosionen der Lampen freigesetzten Metalle und/oder Metalldämpfe sofort immobilisiert und in unschädliche Verbindungen, beispielsweise Quecksilbersulfide, überführt werden. Es besteht keine Gefahr, daß entsprechende Metalle oder Metalldämpfe in den oberen Bereich des Behältnisses und ggf. in die Atmosphäre entweichen.

Der absinkende Glas/Metallbruch so wie die durch die Umsetzung der Metalle bzw. Metalldämpfe mit der im Behältnis befindlichen Flüssigkeit entstehenden Schlämme (Sulfidschlämme) sinken in Richtung auf den Boden des Behältnisses ab und treffen auf eine dort angeordnete Fördereinrichtung, die die entsprechenden Substanzen durch eine Ausführöffnung seitlich aus dem Behältnis herausführt.

Das bekannte Verfahren läßt sich sehr kostengünstig betreiben, da einerseits keine Spezialfahrzeuge zur Entleerung des Behältnisses erforderlich sind und andererseits die Weiterbehandlung (Trennung) der anfallenden Abfallstoffe in vereinfachter Weise durchgeführt werden kann.

Der vorliegenden Erfindung liegt die Aufgabe zugrunde, ein Verfahren der angegebenen Art zu schaffen, mit dem metall- bzw. metalldampfhaltige Gegenstände besonders effizient verwertet werden können.

Diese Aufgabe wird bei einem Verfahren der angegebenen Art dadurch gelöst, daß
die Gegenstände beim Sammeln unter Verwendung einer Verbindungs- und Fixiereinrichtung für die seitlichen Endabschnitte mindestens einer Seite der Gegenstände lagenweise angeordnet werden;
mindestens eine Lage der verbundenen und fixierten Gegenstände im Behältnis angeordnet wird;
die Verbindungs- und Fixiereinrichtung innerhalb der Flüssigkeit derart mit Druck beaufschlagt wird, daß die seitliche Endabschnitte der Gegenstände einer Lage abgebrochen werden;
die Mittelabschnitte der Gegenstände einer Lage durch Druckbeaufschlagung zerbrochen werden; und
die abgebrochenen seitlichen Endabschnitte und die zerbrochenen Mittelabschnitte getrennt voneinander aufgefangen und getrennt aus dem Behältnis abgeführt werden.

Das erfindungsgemäße Verfahren basiert auf zwei Hauptschritten:
zum einen werden die zu entsorgenden Gegenstände nicht einzeln gesammelt und zum Entsorgungsbehältnis transportiert, sondern am Sammelort zu Packungen zusammengefaßt, um auf diese Weise die Handhabung der Gegenstände und deren Transport zum Entsorgungsbehältnis zur vereinfachen. Dabei werden diese Packungen so ausgebildet, daß sie direkt im Entsorgungsbehältnis eingesetzt werden können, d.h. ein Lösen der Gegenstände aus den Packungen heraus, um diese in das Behältnis einzuführen, nicht erforderlich ist.

Zum anderen werden im Entsorgungsbehältnis keine einzelnen Gegenstände, sondern die aus den Gegenständen gebildeten Packungen behandelt, wobei es diese Packungen ermöglichen, die Endabschnitte und Mittelabschnitte der Gegenstände separat zu behandeln, nämlich die Endabschnitte der Gegenstände einer Lage (Packung) auf der einen Seite oder auf beiden Seiten abzubrechen und separat weiterzubehandeln und die Mittelabschnitte zu zerbrechen und separat weiterzubehandeln. Das Behältnis ist entsprechend ausgebildet, um diese Vorgehensweise zu ermöglichen, d.h. die Einrichtung zur Druckbeaufschlagung der Gegenstände weist zwei getrennt Abschnitte auf, mittels denen Druck auf die Endabschnitte und Druck auf die Mittelabschnitte getrennt voneinander aufgebracht werden kann. Ferner sind getrennte Auffang- und Abführeinrichtungen im Behältnis für die abgebrochenen Endabschnitte und die zerbrochenen Mittelabschnitte vorgesehen.

Die getrennte Behandlung der Endabschnitte und Mittelabschnitte, die mit dem erfindungsgemäßen Verfahren durchgeführt wird, ist insbesondere bei der Abfallverwertung von quecksilberdampfhaltigen Lampen von Bedeutung, da hierdurch eine Trennung des Röhrenglases von den Röhrenenden möglich wird. Die Kopfenden der Röhren, die neben Eisen Bleiglas, Aluminium und Messing enthalten, werden daher von dem Röhrenglas, das zur Wiederverwertung mit dem anderen Material nicht vermischt werden darf, getrennt. Diese exakte Trennung wird schon beim Sammeln der Lampen vorbereitet, da hierbei Packungen oder Lagen unter Verwendung einer Verbindungs- und Fixiereinrichtung gebildet werden, wobei diese Verbindungs- und Fixiereinrichtung die seitlichen Endabschnitte (Kopfenden) der Gegenstände bzw. Lampen oder Röhren miteinander verbindet und fixiert. Im Entsorgungsbehältnis wird dann auf diese Verbindungs- und Fixiereinrichtung, die beispielsweise in der Form einer Oberschiene und einer Unterschiene ausgebildet sein kann, Druck aufgebracht, wodurch die in der Verbindungs- und Fixiereinrichtung, d.h. zwischen Oberschiene und Unterschiene, angeordneten Gegenstände (Röhren) an dieser Stelle abgebrochen werden. Mit anderen Worten, die Verbindungs- und Fixiereinrichtung wird durch Druckaufbringung in ihrer Höhenabmessung verringert, d.h. die Oberschiene und Unterschiene werden relativ zueinander verschoben, so daß der gewünschte Brucheffekt der Gegenstände bzw. Lampen oder Röhren erzielt wird. Es versteht sich, daß die Verbindungs- und Fixiereinrichtung genau an der Stelle der Gegenstände angeordnet wird, an der die Endabschnitte abgebrochen werden sollen.

Die Verbindungs- und Fixiereinrichtung hat daher zwei Aufgaben zu erfüllen: zum einen, soll sie für eine Fixierung bzw. Arretierung der Gegenstände nach dem Sammeln und beim Transport dienen, so daß Packungen bzw. Lagen der Gegenstände ausgebildet werden können. Zum anderen dient sie als Einrichtung, auf die der Druck im Entsorgungsbehältnis aufgebracht wird, um die seitlichen Abschnitte bzw. Kopfenden der Gegenstände abzutrennen.

Die Einrichtung zur Druckaufbringung im Entsorgungsbehältnis weist einen weiteren Abschnitt auf, der Druck auf die Mittelabschnitte der Gegenstände aufbringt, um diese Mittelabschnitte zu zerstören. So kann beispielsweise die Einrichtung zur Druckaufbringung so ausgebildet sein, daß sie zwei äußere Abschnitte aufweist, die mit den Verbindungsund Fixiereinrichtungen in Kontakt treten und diese zusammenpressen, und einen Mittelabschnitt besitzt, der sich stempelförmig weiter abwärts bewegt als die beiden äußeren Abschnitte, um die Mittelabschnitte der Gegenstände zu zerbrechen und zu zerstören.

Die in das Entsorgungsbehältnis eingebrachte Packung oder Lage kann dort fixiert werden, um eine entsprechende Druckaufbringung zu ermöglichen, oder gegen einen vorgesehenen Rost gedrückt werden, so daß die zerbrochenen Teile durch den Rost in die entsprechenden Aufnahmeeinrichtungen fallen können.

Vorzugsweise werden beim Sammeln mehrere Lagen der Gegenstände übereinander angeordnet, wobei sich die Verbindungsund Fixiereinrichtungen aufeinander abstützen. Dabei werden die übereinander angeordneten Lagen der Gegenstände zweckmäßigerweise über seitliche Sicherungseinrichtungen gehalten. Bei einer besonders bevorzugten Ausführungsform werden die Gegenstände in einer Transportbox gesammelt.

Nimmt man einmal an, daß es sich bei den Gegenständen um zu entsorgende Leuchtstoffröhren handelt, so werden diese zum Entsorgen lagenweise übereinander in der Transportbox gesammelt, wobei jede Lage vorzugsweise über zwei seitliche Verbindungs- und Fixiereinrichtungen zusammengehalten wird. Auf der ersten Lage wird eine weitere Lage angeordnet, wobei sich die Verbindungs- und Fixiereinrichtungen aufeinander abstützen. Die aufeinander gestapelten Lagen werden durch die seitliche Sicherungseinrichtung arretiert. Die auf diese Weise gebildete Transportbox wird beispielsweise mit Hilfe einer Hubeinrichtung auf ein Fahrzeug geladen und mit diesem einem zentral angeordneten Entsorgungsbehältnis zugeführt. Die Box wird wiederum über eine geeignete Hubeinrichtung vom Fahrzeug gehoben und über eine Fördereinrichtung von oben in das Behältnis eingeführt. Es findet dann die vorstehend beschriebene Behandlung im Behältnis statt. Nach dem Zerstören der Leuchtstoffröhren in der vorstehend beschriebenen Weise wird die Behälterbox wieder aus dem Behältnis entfernt und beispielweise zu ihrem ursprünglichen Standort zurückbefördert, wo sie neue Leuchtstoffröhren aufnehmen kann.

Die vorliegende Erfindung betrifft ferner ein Behältnis zur Durchführung des vorstehend beschriebenen Verfahrens. Der Grundaufbau eines derartigen Behältnisses ist in der bereits erwähnten DE 42 33 046 C2 beschrieben, auf die hiermit bezug genommen wird. Nachfolgend werden daher nur Merkmale erläutert, die sich von dem bekannten Behältnis unterscheiden.

Das erfindungsgemäß ausgebildete Behältnis besitzt eine Aufnahme- und Absenkeinrichtung für die Lage der Gegenstände, eine Einrichtung zur Druckausübung mit getrennten Abschnitten für die Endabschnitte und Mittelabschnitte der Gegenstände, separate Aufnahmeabschnitte für die abgebrochenen Endabschnitte und zerbrochenen Mittelabschnitte der Gegenstände und separate Abführeinrichtungen für die abgebrochenen Endabschnitte und zerbrochenen Mittelabschnitte.

Die Aufnahmeeinrichtung weist zweckmäßigerweise Aufnahme/Führungssäulen an den Ecken des Behältnisses auf, die Absenkeinrichtung wird vorzugsweise vom Deckel des Behältnisses gebildet. Das Behältnis hat vorzugsweise einen in der Flüssigkeit angeordneten Rost, gegen den die Einrichtung zur Druckausübung arbeitet. Die separaten Aufnahmeabschnitte umfassen zweckmäßigerweise einen Hauptkanal für die Mittelabschnitte der Gegenstände und mindestens einen seitlich hiervon angeordneten Nebenkanal, in welchen Kanälen Fördereinrichtungen angeordnet sind.

Die Funktionsweise des Behältnisses sei nachfolgend in bezug auf die Entsorgung von Leuchtstoffröhren erläutert. Zum Aufnehmen einer Transportbox wird der Deckel des Behältnisses nach oben bewegt. Die mit Leuchtstoffröhren gefüllte Transportbox wird nunmehr aus seitlicher Richtung in eine Position unterhalb des Deckels bewegt und am Deckel fixiert. Diese Position ist derart, daß die Transportbox an den Innenseiten der Aufnahme/Führungssäulen des Behältnisses anliegt und somit durch Abwärtsbewegen des Deckels in geführter Weise in die im Behältnis befindliche Flüssigkeit eingetaucht werden kann. Am Deckel befindet sich die Einrichtung zur Druckausübung, die beispielsweise in der Form von Stempelabschnitten ausgebildet ist, welche sich von der Unterseite des Deckels aus nach unten bewegen und auf diese Weise das Lagenpaket aus den Leuchtstoffröhren nach unten gegen den Rost des Behältnisses pressen. Dabei bewegen sich als erstes die beiden seitlichen Stempelabschnitte nach unten und treten mit den Verbindungs- und Fixiereinrichtungen des Lagenpaketes in Kontakt, wodurch die Kopfenden der Leuchtstoffröhren abgebrochen werden. Es folgt dann ein Absenken des mittleren Stempelabschnittes vom Deckel aus, so daß die Mittelabschnitte der Leuchtstoffröhren gegen den Rost gepreßt und auf diese Weise zerstört werden. Der Glasbruch der Mittelabschnitte gelangt dabei durch den Rost in den am Boden des Behältnisses angeordneten Hauptkanal, und zwar auf den im Hauptkanal angeordneten Horizontalförderer, und wird vom Horizontalförderer seitlich aus dem Behältnis herausgeführt. Die abgebrochenen Kopfteile gelangen ebenfalls durch den Rost in zwei Nebenkanäle, und zwar ebenfalls auf dort angeordnete Horizontalförderer, und werden von diesen auch seitlich aus dem Behältnis herausgeführt. Da sämtliche Zerstörungsvorgänge der Leuchtstoffröhren in der erwähnten Flüssigkeit durchgeführt werden, wird die Gefahr des Entstehens von toxischen Gasen vermieden.

Die Erfindung ist ferner auf eine Transportbox zur Durchführung des eingangs geschilderten Verfahrens gerichtet. Eine derartige Transportbox ist dadurch gekennzeichnet, daß sie eine Vielzahl von übereinander angeordneten, die Gegenstände zwischen sich aufnehmenden Schienenpaaren aufweist. Eine Oberschiene und eine Unterschiene eines Schienenpaares besitzen vorzugsweise auf ihren gegeneinanderweisenden Seiten Ausnehmungen zur teilweisen Aufnahme der Gegenstände auf. Da es sich bei dem Gegenständen vorzugsweise um Leuchtstoffröhren handelt, sind diese Ausnehmungen im Schnitt etwa halbkreisförmig ausgebildet. Sind die Leuchtstoffröhren in den Ausnehmungen angeordnet, weisen Oberschiene und Unterschiene einen Abstand voneinander auf, so daß durch Druckaufbringung auf die Oberschiene oder Unterschiene die Leuchtstoffröhren zerbrochen bzw. abgebrochen werden können. Die Breite der Oberschiene und Unterschiene kann den entsprechenden Erfordernissen angepaßt werden.

Die Vielzahl der Schienenpaare ist zweckmäßigerweise durch zwei stirnseitig hiermit verbindbare Sicherungselemente fixierbar. Auf diese Weise wird eine stabile Lage der Gegenstände während des Transportes erreicht. Es hat sich gezeigt, daß es für die Praxis von Vorteil ist, bis zu acht Lagen von Gegenständen übereinander anzuordnen.

Mit dem erfindungsgemäß ausgebildeten Verfahren und dem erfindungsgemäß ausgebildeten Behältnis sowie der erfindungsgemäß ausgebildeten Transportbox werden ein sicherer Transport der Gegenstände, eine Trennung der Endabschnitte der Gegenstände vom Mittelabschnitt, eine erhebliche Arbeitsersparnis beim Immobilisierungsprozeß und eine Verringerung des Volumens beim Trennen von Metall und anderem Material vom Lampenglas (im Falle von Lampen) um ca. 80 - 85% erreicht. Die Gegenstände werden beim Kunden in den Transportboxen gestapelt und mit diesen transportiert. In der Transportbox sind die Gegenstände fest arretiert. Die gesamte Box ist als Befüllungselement für das Entsorgungsbehältnis konstruiert, wobei die im Behältnis durchgeführte Trennung der Endabschnitte vom Mittelabschnitt bereits durch die Transportbox vorbereitet wird.

Der Zerstörungsvorgang erfolgt unter Flüssigkeit und Druck durch Stempel, Zylinder, mechanische Spindeln oder ähnliche Vorrichtungen. Die seitlichen Abschnitte werden im Behältnis durch Druck abgesprengt bzw. abgebrochen.

Die mit der Erfindung erreichte Separierung der Seitenabschnitte vom Mittelabschnitt (Kopfenden vom Mittelabschnitt der Röhren) hat den Vorteil, daß eine spätere mühsame Separierung nicht mehr erforderlich ist. Die größte Arbeitsersparnis ergibt sich bei der Befüllung des Behältnisses. Es können pro Arbeitsprozeß bis zu 300 Gegenstände pro Arbeitsgang zerstört werden. Der Zerstörungsvorgang dauert kaum länger als bei der bisher durchgeführten Einzelbeschickung von 20 oder 50 Gegenständen. Bei reibungslosem Ablauf wird somit das sechs- bis zehnfache der Tagesproduktion erreicht.

Da eine Shredderanlage zur Metallseparierung nur noch 15% des Ursprungsvolumens zu bewältigen hat, führt dieses ebenfalls zur Zeiteinsparung und verringert den Verschleißvorgang erheblich.

Die Erfindung wird nachfolgend anhand eines Ausführungsbeispiels in Verbindung mit der Zeichnung im einzelnen erläutert. Es zeigen:
- Figur 1: eine räumliche schematische Ansicht einer mit Leuchtstoffröhren gefüllten Transportbox;
- Figur 2: eine auseinandergezogene schematische Darstellung der die Verbindungs- und Fixiereinrichtung bildenden Schienen mit Sicherungselement; und
- Figur 3: eine schematische räumliche Ansicht eines Behältnisses zum Zerstören der Leuchtstoffröhren.

Bei dem in den Figuren dargestellten Ausführungsbeispiel geht es um das Entsorgen von Leuchtstoffröhren. Derartige Röhren sind bekannt und brauchen an dieser Stelle nicht mehr im einzelnen beschrieben zu werden. Wesentlich ist, daß sie zwei Kopfenden haben, die aus metallischen Teilen und Bleiglas bestehen und vom übrigen Röhrenglas des Mittelabschnittes zu trennen sind, um eine Wiederverwertung des Röhrenglases des Mittelabschnittes zu ermöglichen.

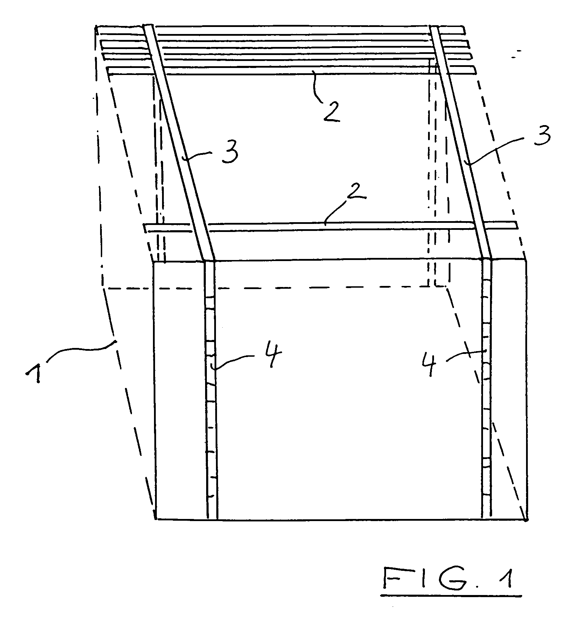

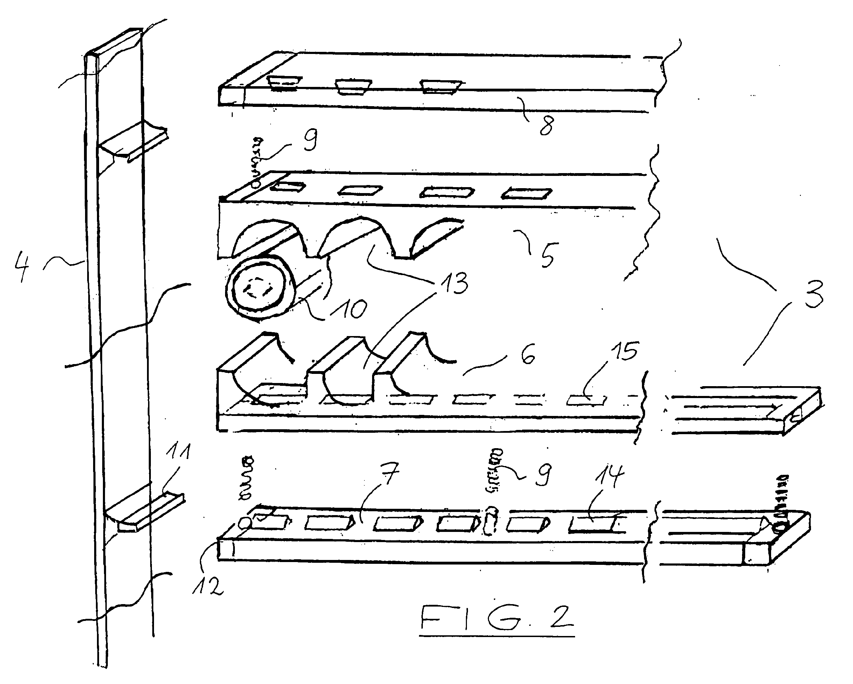

Die in Figur 1 dargestellte Transportbox besteht im wesentlichen nur aus schienenförmigen Verbindungs- und Fixiereinrichtungen 3, die zum Verbinden und Fixieren der quer hierzu angeordneten Leuchtstoffröhren 2 dienen. Der genaue Aufbau dieser schienenförmigen Verbindungs- und Fixiereinrichtungen 3 ist in Figur 2 dargestellt. Die zu entsorgenden Leuchtstoffröhren 2 werden mit Hilfe dieser schienenförmigen Verbindungs- und Fixiereinrichtungen 3 lagenweise gestapelt, wobei die Verbindungs- und Fixiereinrichtungen 3 aufeinander zu liegen kommen. Wenn eine Lage mit Leuchtstoffröhren fertiggestellt ist, wird hierauf mit Hilfe von neuen Verbindungs- und Fixiereinrichtungen 3 eine neue Lage von Leuchtstoffröhren erstellt. Auf diese Weise kann ein Stapel von diversen Lagen errichtet werden, beispielsweise können acht Lagen übereinander angeordnet werden. Um den Stapel zu fixieren, finden Sicherungselemente 4 Verwendung, die die einzelnen Verbindungs- und Fixiereinrichtungen 3 der verschiedenen Lagen stirnseitig miteinander verriegeln. Auf diese Weise entsteht eine sogenannte Transportbox 1, die über geeignete Hub- und Fördermittel einem zentralen Entsorgungsbehältnis zugeführt werden kann.

Figur 2 zeigt die Ausbildung der Verbindungs- und Fixiereinrichtungen 3. Diese setzen sich im wesentlichen aus einer Oberschiene 5 und einer Unterschiene 6 zusammen, welche auf ihren gegenüberliegenden Seiten im Schnitt etwa halbkreisförmige Ausnehmungen 13 zur Aufnahme der Leuchtstoffröhren 10 besitzen. Der Ober- und Unterschiene 5,6 ist jeweils eine Halterungsschiene 7,8 zugeordnet, die mit Hilfe von Vorsprüngen 14 in Ausnehmungen 15 der Ober- und Unterschiene 5,6 verriegelt werden können. Zwischen der Oberund Unterschiene 5,6 und den zugehörigen Halterungsschienen 7,8 sind Federn 9 angeordnet. Die Halterungsschienen 7,8 werden stirnseitig an Ansätzen 11 der Sicherungselemente 4 befestigt, wobei die Ansätze 11 in stirnseitige Ausnehmungen 12 der Halterungsschienen eindringen. Wenn die Halterugnsschienen 7,8 über die Ansätze 11 am Sicherungselement 4 angebracht sind, drücken sie über die Federn 9 die Oberschiene 5 und Unterschiene 6 gegeneinander, so daß diese die Leuchtstoffröhren 10 im vorgespannten Zustand aufnehmen, so daß die Leuchtstoffröhren 10 eine geeignete Transportarretierung erhalten. Es versteht sich, daß sich die Oberschiene 5 und Unterschiene 6 in diesem Zustand nicht berühren, so daß bei späterer Druckaufbringung im Entsorgungsbehältnis die dazwischen angeordneten Leuchtstoffröhren 10 zerbrochen werden.

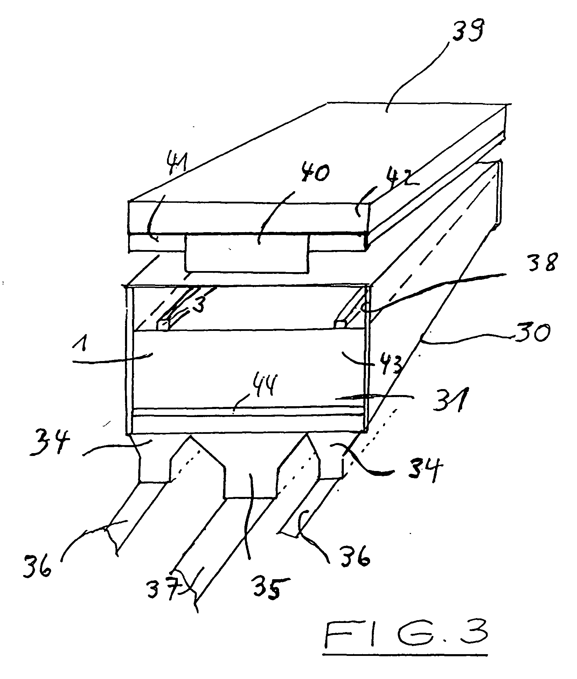

Figur 3 zeigt schematisch in räumlicher Ansicht den Aufbau eines Behältnisses 31 zur Entsorgung bzw. Zerstörung der Leuchtstoffröhren. Weitere Einzelheiten in bezug auf dieses Behältnis kann der Fachmann der vorstehend erwähnten DE 42 33 046 C2 entnehmen. In Figur 3 ist das Behältnis nur schematisch mit den Merkmalen dargestellt, die sich von den Merkmalen des bekannten Behältnisses unterscheiden.

Die gesamte, in Figur 1 dargestellte Transportbox (Röhrenpaket) wird in das Behältnis 31 eingeführt. Das Behältnis 31 hat etwa einen rechteckigen Querschnitt und ist kastenförmig ausgebildet. Es besitzt einen Deckel 39, der nach oben und unten entlang an den Ecken angeordneten Führungssäulen 38 bewegbar ist. Die Transportbox 1 wird mit Hilfe von geeigneten Fördermitteln, beispielsweise einer Rollenbahn, aus seitlicher Richtung in eine Position unterhalb des Deckels 39 geführt und am Deckel fixiert. Durch Absenken des Deckels 39 gelangt die Transportbox 1 im an den Führungssäulen 38 geführten Zustand nach unten in das Behältnis 31 hinein, wobei es in die dort vorgesehene Flüssigkeit 43 eingetaucht wird. In der Figur ist die Transportbox 1 im abgesenkten Zustand dargestellt, während der Deckel 39 im angehobenen Zustand gezeigt ist. An der Unterseite des Deckels ist eine Einrichtung zur Druckausübung angeordnet, die zwei seitliche Abschnitte 41 und 42 und einen mittleren Abschnitt 40 aufweist. Es kann sich hierbei um plattenförmige Abschnitte handeln. Bei Betätigung der Druckausübungseinrichtung, d.h. beim Ausfahren der Abschnitte 41,42 und 40 nach unten, treten die seitlichen Abschnitte 41,42 mit den beiden obersten Verbindungs- und Fixiereinrichtungen 3 der Transportbox 1 in Eingriff, während der mittlere Abschnitt 40 der Druckausübungseinrichtung direkt mit den Mittelabschnitten der Leuchtstoffröhren 10 in Eingriff tritt. Durch Druckausübung der Abschnitte 41,42 werden die Kopfenden der Leuchtstoffröhren 10 abgebrochen und gelangen durch den im Behältnis vorgesehenen Rost 44 in die beiden am Boden des Behältnisses angeordneten Aufnahmekanäle 34, in denen sich geeignete Horizontalförderer 36 befinden, die die abgebrochenen Kopfenden aus dem Behältnis herausfördern. Mittelabschnitte der Leuchtstoffröhren werden durch den mittleren Abschnitt 40 der Druckausübungseinrichtung zerstört und gelangen durch den Rost 44 in den mittleren Aufnahmekanal 35, in dem sich ebenfalls ein Horizontalförderer 37 befindet, der den Glasbruch aus dem Behältnis herausführt. Auf diese Weise werden die Röhren innerhalb einer Flüssigkeit zerstört, die eine Beeinflussung der Umwelt mit toxischen Gasen verhindert. Gleichzeitig werden die Kopfenden der Röhren abgetrennt und vom Glasbruch des Röhrenglases der Mittelabschnitte separiert. Eine spätere mühsame Trennung kann daher entfallen.

Nach dem Zerstören der Röhren kann die Transportbox 1 wieder aus dem Behältnis entfernt und zu ihrem Standort zurückgeführt werden.

Wenn vorstehend von einer Druckbeaufschlagung zum Abbrechen der seitlichen Endabschnitte der Gegenstände die Rede ist, so soll diese auch andere Arten der Separierung umfassen, beispielsweise ein Abscheren (über rotierende Elemente etc.), das Aufbringen von Momenten (über Hebel) etc.. Jedenfalls ist die Erfindung hier keinen Beschränkungen ausgesetzt.

Auch ist die zeitliche Abstimmung zwischen dem Separieren der Endabschnitte und dem Zerbrechen der Mittelabschnitte je nach den Anforderungen beliebig gestaltbar.

Statt der zwischen Oberschiene und Unterschiene angeordneten Federn können auch andere elastische Elemente, wie Gummiblöcke, Gummikugeln etc., Verwendung finden.

## Patentansprüche

1. Verfahren zur Abfallverwertung von metall- bzw. metalldampfhaltigen Gegenständen, insbesondere quecksilberdampfhaltigen Lampen, bei dem die Gegenstände gesammelt, in ein Behältnis, in dem die Gegenstände in einer das Metall bzw. den Metalldampf in unschädliche Verbindungen, insbesondere Sulfide, umwandelnden Flüssigkeit zerbrochen werden, eingebracht und im Behältnis zerbrochen werden und bei dem der Glas/Metall-Bruch und der durch Umsetzung entstandene Schlamm aus dem Behältnis abgeführt werden, **dadurch gekennzeichnet, daß**
die Gegenstände beim Sammeln unter Verwendung einer Verbindungs- und Fixiereinrichtung für die seitlichen Endabschnitte mindestens einer Seite der Gegenstände lagenweise angeordnet werden;
mindestens eine Lage der verbundenen und fixierten Gegenstände im Behältnis angeordnet wird;
die Verbindungs- und Fixiereinrichtung innerhalb der Flüssigkeit derart mit Druck beaufschlagt wird, daß die seitlichen Endabschnitte der Gegenstände der mindestens einen Lage abgebrochen werden;
die Mittelabschnitte der Gegenstände der einen Lage durch Druckbeaufschlagung zerbrochen werden; und
die abgebrochenen seitlichen Endabschnitte und die zerbrochenen Mittelabschnitte getrennt voneinander aufgefangen und getrennt aus dem Behältnis abgeführt werden.

2. Verfahren nach Anspruch 1, **dadurch gekennzeichnet, daß** beim Sammeln mehrere Lagen der Gegenstände übereinander angeordnet werden, wobei sich die Verbindungs- und Fixiereinrichtungen aufeinander abstützen.

3. Verfahren nach Anspruch 2, **dadurch gekennzeichnet, daß** die übereinander angeordneten Lagen der Gegenstände über seitliche Sicherungseinrichtungen gehalten werden.

4. Verfahren nach einem der vorangehenden Ansprüche, **dadurch gekennzeichnet, daß** die Gegenstände in einer Transportbox gesammelt werden.

5. Verfahren nach einem der vorangehenden Ansprüche, **dadurch gekennzeichnet, daß** als Verbindungs- und Fixiereinrichtung eine eine Oberschiene und Unterschiene aufweisende Vorrichtung verwendet wird, bei der Oberschiene und Unterschiene Ausnehmungen zur teilweisen Aufnahme der Gegenstände besitzen.

6. Verfahren nach einem der vorangehenden Ansprüche, **dadurch gekennzeichnet, daß** im Behältnis zuerst die Endabschnitte der Gegenstände abgebrochen werden, wonach die Mittelabschnitte zerbrochen werden.

7. Behältnis zur Durchführung des Verfahrens nach einem der vorangehenden Ansprüche, **dadurch gekennzeichnet, daß** es eine Aufnahme- und Absenkeinrichtung für die Lage der Gegenstände, eine Einrichtung (40,41,42) zur Druckausübung mit getrennten Abschnitten für die Endabschnitte und Mittelabschnitte der Gegenstände, separate Aufnahmeabschnitte (34,35) für die abgebrochenen Endabschnitte und zerbrochenen Mittelabschnitte der Gegenstände und separate Abführeinrichtungen (36,37) für die abgebrochenen Endabschnitte und zerbrochenen Mittelabschnitte aufweist.

8. Behältnis nach Anspruch 7, **dadurch gekennzeichnet, daß** die Aufnahmeeinrichtung Aufnahme/Führungssäulen (38) an den Ecken des Behältnisses (31) aufweist und die Absenkeinrichtung vom Deckel (39) des Behältnisses (31) gebildet ist.

9. Behältnis nach Anspruch 7 oder 8, **dadurch gekennzeichnet, daß** es einen in der Flüssigkeit (43) angeordneten Rost (44) aufweist, gegen den die Einrichtung(40,41,42) zur Druckausübung arbeitet.

10. Behältnis nach einem der Ansprüche 7 - 9, **dadurch gekennzeichnet, daß** die separaten Aufnahmeabschnitte (34,35) einen Hauptkanal (35) für die Mittelabschnitte der Gegenstände und mindestens einen seitlich hiervon angeordneten Nebenkanal (34) umfassen, in welchen Fördereinrichtungen (36,37) angeordnet sind.

11. Transportbox zur Durchführung des Verfahrens nach einem der Ansprüche 1 - 6, **dadurch gekennzeichnet, daß** sie eine Vielzahl von übereinander angeordneten, die Gegenstände zwischen sich aufnehmenden Schienenpaaren (5,6) aufweist.

12. Transportbox nach Anspruch 11, **dadurch gekennzeichnet, daß** die Vielzahl der Schienenpaare (5,6) durch zwei stirnseitig hiermit verbindbare Sicherungselemente (4) fixierbar ist.

13. Transportbox nach Anspruch 11 oder 12, **dadurch gekennzeichnet, daß** eine Oberschiene (5) und eine Unterschiene (6) eines Schienenpaares auf ihren gegeneinanderweisenden Seiten Ausnehmungen (13) zur teilweisen Aufnahme der Gegenstände besitzen.
